# EUROPEAN PATENT APPLICATION

(11) **EP 1 929 882 A1**
(43) Date of publication of application: **11.06.2008**
(21) Application number: 06125489.2
(22) Date of filing: 06.12.2006
(51) Int. Cl.: A23L 1/187, A23G 3/54, A23G 1/30, A23C 9/137

(54) **A kit for preparing an edible dessert product and a method for preparing an edible dessert product using such kit**

(71) Applicant: UNILEVER N.V., 3013 AL Rotterdam (NL)
(72) Inventor: Elliott, Brown Magnum Desserts Limited, Bedfordshire MK44 1LQ (GB)
(74) Representative: Rots, Maria Johanna Francisca

(57) **Abstract**

A kit is provided for the preparation of an edible dessert product. It comprises a first closed container that contains a dessert gel at a temperature of 1-15°C. The gel may not be dependent on gelatin. The container constitutes a mould for the gel and the gel is demouldable therefrom. The kit further comprises a second closed container that contains a sauce composition. The container and sauce composition are suitable for microwave heating. The sauce composition is pourable or can be made pourable by microwave heating. The dessert product can be prepared with the kit by opening the closed first container, demoulding the dessert gel therefrom, heating the second container to provide a pourable sauce, and pouring the pourable sauce on top of the demoulded dessert gel.

## Description

The invention relates to a kit for preparing an edible dessert product and to a method for preparing an edible dessert product using such kit. A wide variety of dessert products are available. In particular products providing contrast in sensoric properties in the mouth between adjacent parts of the product are appreciated. Examples of such products are profiteroles of choux pastry filled with cream and coated with chocolate sauce, strawberries and cream, vanilla pudding covered with blackberry sauce, warm apple pie with icecream and chocolate mousse with whipped cream. Traditionally, restaurants serve a wide range of such products, including products such as Dame Blanche, comprising icecream with warm chocolate sauce and Poire belle Hélène, which is pear poached in syrup, placed on vanilla icecream and topped with warm chocolate sauce. Especially such composite products with contrast in temperature between parts of the product can be difficult or labour intensive to make. To address this, a range of dessert products has been developed that aim to provide the sensoric contrast, in particular temperature difference between adjacent parts of the product.

According to the Mintel ® GNPD (global new products database) a range of dessert products comprising sensoric contrast is available on the market. Several of these are sold to the user as a kit. The van der Poel desserts range includes icecream with warm cherry or chocolate sauce. The icecream and sauce are separately packed and the sauce must be taken from the freezer 15 minutes before use. The sauce can be heated in a microwave. "Heiss auf Eis" from Schöller ® is a single portion tub of vanilla icecream with a separate serving of hot topping sauce which is to be heated in a microwave oven before pouring it over the icecream. Sara Lee Choc Fudge ® is an icecream dessert comprising a chocolate and vanilla log. It includes a pouch of chocolate fudge sauce which is meant to be warmed in the microwave and poured over the product. Soufrises ® is a frozen dessert of apple cream soufflés with cinnamon icecream and a sachet of caramel sauce topping. Marks & Spencer ® profiteroles and chocolate sauce is a frozen dessert comprising choux pastry profiteroles filled with cream and a pot of chocolate sauce. The product needs to be defrosted before being eaten, in a microwave or on a hob. Marks & Spencer ® Italian style profiteroles is a chilled dessert product comprising profiteroles with a chocolate truffle dip, which can be served as an accompaniment. The profiteroles have a mousse filling. The sauce can be heated in the microwave or on the hob and the whole pack is suitable for freezing.

Bonne Maman ® has marketed several baked dessert products based on egg, such as Creme Caramel and Creme Brûlée. They are stored chilled. The dessert gel is contained in a glass jar. The Creme Brulee may be given a caramel layer by removing the lid from the jar, pouring a thin layer of cane sugar onto it and placing the jar under a grill. Care should be taken not to overheat the gel. The product should be left to cool down before consumption. Magnum ® has marketed a range of chilled dessert products comprising cheesecake like products coated with a chocolate layer.

US 4,794,008 discloses a packaged frozen food product which includes a first microwave permeable package portion containing a first frozen food component and a second microwave reflective package portion containing a second frozen food component. Upon microwave heating, the first food component will be thawed while the second one will remain frozen. Upon heating, the food component held in the upper part of the package will fall by gravity onto the food component in the lower part of the package. After removing the upper part of the package, the food will be contained in the lower part of the package and is ready for consumption. In one embodiment, the first food component is e.g. chocolate syrup, fruit syrup or preserve and the second food component is e.g. icecream, frozen edible emulsion or frozen pudding. By microwave heating an icecream sundae, e.g. with preserves or hot fudge, is obtained. In another embodiment, the first food component is a frozen cake or pie and the second component is again e.g. icecream. Upon microwave heating a cake or pie "ala mode" is obtained.

WO 90/08710 is concerned with a frozen icecream cup with an invertible lid for a hot sundae topping. It discloses a package containing a frozen dessert portion and a frozen flavored topping, the package being arranged to allow the topping to melt while the dessert portion remains substantially frozen when the frozen package is placed in a microwave oven. The molten topping pours down onto the frozen dessert mix. The cap is then removed and the hot sundae is ready for eating directly from the container.

GB 2,123,377 discloses a package with two trough-shaped containers. One container has a filling of a food product and the other contains auxiliary garnishing intended to be applied to the food product at the moment of use. The food product is e.g. a solid or a settable confectionery product, typically a liquid or semi-liquid cream which can be set by freezing. After the product has been removed from the container, it retains its triangular prismatic shape to evoke the typical form of the icecream product known as cassata. The auxiliary garnishing products, possibly wrapped in small polyethylene packets, may comprise candied fruit, hazelnut granules, powdered meringue or nougat. Alternatively it may be present in the form of water biscuits, fruit syrups or semi-liquid creams in the form of a paste.

GB 2,153,778 discloses a package for food products comprising two containers. One container contains an icecream type product. The product is liquid or semi-liquid at ambient temperature. It is filled in the container and it turns solid in the freezer. The other container is filled with a powdered garnishing, typically a cocoa or nut based powder intended to be sprinkled on the icecream product. The garnish container can be rhythmically squeezed to expel the garnishing through a plurality of holes. Before consumption, the icecream product is expelled from the container and put on a plate. It is then garnished with the powder.

FR 1.287.386 describes a sealed package containing a frozen dish, e.g. a dessert, and in a separate sachet, a sauce for the dish.

EP 345,227 describes a package for food products. The package comprises a flat base constituting a support for the food product, a cover and a flexible wrapper enveloping the base and the cover. The food product can e.g. be a slice of cake. The package may contain an auxiliary sachet which can contain a liquid or creamy substance, e.g. a hazelnut-flavoured cream which can be used to decorate the product immediately before it is eaten.

JP 9095363 describes a package containing a sauce in a container body, a separation sheet and sponge cake contained in the lid part of the container. Just before eating, the separation sheet can be removed such that the sponge cake drops down into the container body and the sauce.

US 2002/0,064,582 is concerned with shelf stable food products and mix kits. The product does not require refrigeration and allows one to prepare food product easily and quickly, while providing a food that appears to be fresh. The container comprises a first food product having a defined shape and a second food product in dried powder form intended to be reconstituted with a liquid. The container supports the first product and encloses the second product in a flexible package. The second product is intended as a filler for the first product. The powder may be poured in a bowl, mixed with water or milk to obtain the filler, e.g. a cheese filler. After short refrigeration, the filler can be filled into the first product which may e.g. be cannoli shells, hollow pasta products, lady fingers or the like.

Despite these efforts, the present status of desserts products leaves much to be desired. The products offering contrast in organoleptic properties are often frozen. If they are to be defrosted before consumption, they often suffer from syneresis or have a suboptimal texture due to the use of thickeners and water binders to prevent such syneresis. Most of the products offering temperature contrast involve icecream. They contain high amounts of ice crystals. Such products must be eaten quickly, and even then, often the icecream melts so rapidly because of the contact with the warm garnish that an undesirably high amount of molten icecream forms. Furthermore, the icecream or frozen dessert has such a low temperature that any sauce to be served with it, must be designed such that even at temperatures at or below freezing it is still palatable. This leads to the use of structurants that adversely affect the texture and taste of such sauce compositions making them e.g. tough or stringy. Dessert products like profiteroles rely on pastry surface to be in contact with the warm sauce. Such surface may rapidly turn soft or soggy, in contact with warm garnish such as sauce.

We have now found that a variety of dessert products can be provided that can offer temperature contrast at an affordable price and that are easy and quickly to prepare for the caterer or the user. The risk of failure in preparing the product e.g. by a caterer, and therefore the amount of waste, can be low. The products do not have the above drawbacks or not to the same extent. In particular they can be less vulnerable to syneresis or melting. They need not contain the high level of structurant or water binder that can adversely affect the texture or taste. The surface structure of the cooler part of the dessert product can be little affected by the contact with the warmer component.

Accordingly, the present invention offers a kit for preparing an edible dessert product comprising a first closed container containing a dessert gel having a temperature of 1-15°C, which gel is not dependent on gelatin, the container constituting a mould for the gel and the gel being demouldable therefore, and a second closed container containing a sauce composition, which container and sauce composition are suitable to be subjected to microwave heating and which sauce composition is pourable or can be made pourable by microwave heating.

The invention also provides a method for preparing an edible dessert product using the kit of the present invention, comprising the steps of
i) opening the first closed container,
ii) demoulding the dessert gel from the opened first container,
iii) heating the second container to provide a pourable sauce, and
iv) pouring the pourable sauce on top of the demoulded dessert gel.

We have found that particularly attractive dessert products can be obtained if the product to be coated with the sauce has a relatively high free water content. It is therefore preferred for the dessert gel to have a water activity of 0.9-1, especially of 0.93-0.98. The gel preferably includes 40-95 wt% water, 1-11 wt% protein and 3.5-35 wt% fat. More preferably, the dessert gel comprises 1-8 wt% dairy protein.

The dessert gel is kept at a temperature of 1-15°C and is intended to be served for consumption at such temperature. We do not wish to be bound by theory but we believe that the flavour release from the product is then optimal, better than is usually achieved with frozen products. Especially in case of high water activity, i.e. high water content, the heat capacity of the dessert gel is relatively high, which we believe, contributes to the pleasant sensoric contrast perceived between the warm sauce and the chilled gel. This contrast is retained relatively long after the warm sauce is poured onto the chilled gel. The high water content also helps prevent the temperature of the cooler component of the dessert from rising too quickly, which might otherwise cause melting or other texture loss. The avoidance of melting of the gel structure also contributes to organoleptic contrast in texture between the gel and the sauce. The attractive texture contrast can easily be diminished if warm sauce is applied to materials with low water activity such as pastry materials, e.g. profiteroles or cakes, or to frozen products, which loose their structure upon melting of the ice crystals.

The relatively good and prolonged retention of sensoric contrast in temperature and texture between adjacent parts of the present dessert can be even stronger in case of incorporation of a substantial amount of fat such as milk fat. At the chilled temperature of the dessert gel, much of such fat is in the solid state. Upon contact with the warm sauce the fat is molten before the temperature rises. Because the cooler component has a gel structure, the fat is dispersed in the gel structure and consequently the melting of the fat crystals does not cause collapse of product structure. Such effect can, we believe, to some extent also be achieved using other fat than milk fat that has a high portion of the fat melting between 15 and 35°C. Examples of such fats are coconut oil, palmkernel oil, palm mid fraction and the like. However, we believe that, also because of the structure of the fat globules in dairy products, the best results can be achieved with milk fat.

The dessert gel can be a gel based on protein, starch or a combination thereof. The dessert gel may for example be a pudding based on corn starch and/or egg protein, possibly combined with dairy protein. The gel may be formed by heating on a hot plate, e.g. au bain marie, and subsequent cooling or by baking in an oven, e.g. as done for baked cheesecake.

However, we found that the dessert gel should not be based on gelatin. Some gelatin can be tolerated in the product but the gel should not be dependent on gelatin. We found that such gels are more vulnerable when they are coated with warm sauce. The gel structure may locally melt or collapse causing undesirable moisture leakage, deterioration of the texture and/or preventing satisfactory coating of the gel with the sauce.

Preferably, the dessert gel is a gel based on a non-starch, polysaccharide gelling agent. In such gel, preferably high amounts of egg yolk are avoided. High amounts of starch are preferably not used either. Particularly good products can be obtained using agar as non-starch polysaccharide gelling agent. The expression agar includes refined agar materials such as those known as agarose and Danish agar. If the dessert gel is a gel based on agar, the agar content of the gel is suitably 0.05-5 wt% of the dessert gel, preferably 0.1-1 wt%. The choice of gelling agent for the dessert gel is important also for the demouldability of the gel. We have found that baked gels based on egg and/or starch based gelling agent can be difficult to demould. Better results can usually be obtained with gels based on non-starch polysaccharide gelling agent, in particular agar. Such gels can usually be prepared without baking.

The dessert gel can be prepared in conventional manner by filling the composition that is to constitute the gel in liquid condition into a container, which is to act as a mould, closing the container and allowing the gel to set under quiescent conditions. Suitably the container is a plastic tub, which after filling is sealed with a foil. For demoulding the gel from such container, e.g. the lid or foil is removed, the tub is turned onto a plate and a pinhole is made in the bottom of the tub to release the vacuum and allow the gel to slide from the tub onto the plate. If the gel composition is to be baked usually the container will be closed after the baking. For example, the container can be made from heat resistant plastic and be demoulded in the same manner as described above. Alternatively, a container coated with a non-stick layer could be used which would allow the gel to slide out of the container without separate measure to release the vacuum. In yet another embodiment, micro channels in the inner side wall of the container could provide for vacuum release. Or a mould could be used with a releasable bottom allowing the product to be pushed up out of the mould while remaining positioned on the bottom plate of the container. Preferably however, the gel is a not-baked gel based on non-starch polysaccharide gelling agent. In such case a wider and cheaper range of packaging materials from which the gel can more easily be demoulded is available for use for the first container.

The closed container containing the dessert gel is kept at 1-15°C, especially 3-10°C. Preferably, the gel is kept at this temperature throughout any storage and/or transportation up to the point of consumption. It is in particular preferred to prevent that the dessert gel, after it has set, is kept at a temperature below 0°C. Subjecting the dessert gel to sub zero temperature may cause it to freeze. Upon subsequent defrosting the gel may suffer from syneresis.

The present gel does not need to contain high amounts of moisture binders. Nevertheless, small amounts of such moisture binders need not have adverse effects and therefore can be tolerated. Accordingly, the gel may contain small amounts of modified starch, corn flour, maize starch and/or rice starch. However, if such material is present at all, the amount thereof in the gel is preferably less than 1 wt%. Similarly, gums are often included as moisture binders in dessert gels. In the present invention, xanthan gum, cellulose gum e.g. CMC, guar gum and/or locust bean gum, if present at all, are present in a combined amount of preferably less that 1 wt%, more preferably less than 0.5 wt% of the gel.

Agar is the preferred gelling agent but other gelling agents, e.g. K- and/or L-carrageenan and/or gellan may be used in stead of or in combination with agar. If agar is used, the combined amount of non-starch polysaccharide gelling agent other than agar, if present at all, is preferably less than 0.5 wt%, especially less than 0.2 wt% of the gel.

The second container can suitably be a sachet made of plastic that is suitable for heating in a microwave oven. Alternatively, it may for example be a microwaveable cup or jar provided with a closure. The composition to provide the sauce for the dessert gel is filled in the second container and the container is closed. The sauce composition is designed to be suitable for microwave heating. This can conveniently be achieved by using a recipe that provides a combined amount of fat and water in the sauce composition of at least 25 wt%.

The first closed container and the second closed container can be packed together to provide the kit. For example, they may be glued together, they may be packed in a common outer pack, or the first container may be provided with a sleeve to which the second container is attached. Alternatively, the second closed container may be packed inside the first container, e.g. attached to the closure. Other pack constructions to provide the kit may be used as well.

The amount of dessert product in the first container can suitably be chosen in the range of 40-1500 g, especially 70-1000 g. A single serving would usually contain 70-200 g dessert product from the first container. The amount of sauce composition in the second container is chosen to match the amount of dessert product in the first container. The weight ratio of the dessert product in the first container and the amount of sauce composition in the second container can suitably be in the range from 20:1 to 2:1, preferably from 10:1 to 3:1. The weight of the dessert product in the first container includes the weight of the dessert gel, that of the base for the gel if present and the weight of any inclusions or additions to the gel, e.g. discrete not-gelled particles as described below.

In a preferred embodiment, the first container includes an edible base for the dessert gel, e.g. a biscuit base, a sponge base or a chocolate base. Such base can be filled on top of the composition constituting the gel, in the first container. For example, a pre-formed base e.g. a piece of sponge cake or chocolate could be placed on top of the still fluid gel composition. Alternatively, molten chocolate could be dosed onto the gel composition before or after setting of the gel. Upon demoulding by turning the container, the gel will sit on top of the base before it is to be coated with the sauce. In a particularly preferred embodiment, the first closed container contains cheese cake. The cheese cake may consist of the dessert gel, but preferably it includes an edible base.

The dessert gel does not have to be homogeneous in composition throughout. In a preferred embodiment, the gel is composed of at least two portions having different compositions. For example, the gel may include two gelled layers, e.g. a gel layer with vanilla taste on top of a layer with chocolate taste. In such case, each of the layers should be a gel that is not dependent on gelatin. In another preferred embodiment, the gel includes one or more discrete not-gelled particles. For example, pieces of nuts, chocolate or fruit or lumps of fruit puree, compote, jam, sauce or caramel or a combination of such pieces and/or lumps may be included in the gel. Such materials can suitably be dosed into or onto the still fluid gel composition that has already been dosed into the first container. Alternatively they may be put into the container before the gel composition is dosed into it. The gel composition and the other edible material may also be dosed into the container simultaneously. In case fluid materials are used, they will be embedded in the gel formed and thus constitute one or more discrete particles. In case discrete not-gelled particles are present in the gel, their composition should be left out of consideration with respect to the recommended types and amounts of water, protein, fat and, if applicable, gelling agent such as agar, indicated for the dessert gel.

For example, the dessert gel may be orange and passion fruit gel containing discrete pieces of the fruits, or caramel cheese cake comprising discrete particles of caramel embedded in the cheese cake gel and having a biscuit base.

The protein contained in the gel preferably is dairy protein, vegetable protein or a combination thereof, dairy protein being particularly preferred. The gel may for example include fresh cheese as a source of protein, e.g. cream cheese or cottage cheese. Other sources of dairy protein that can beneficially be included are milk, cream, sour cream, yogurt, etc. Also powders such as buttermilk powder, skimmed milk powder, whey powder and the like may be included.

The fat in the gel is preferably milk fat, vegetable fat or a combination thereof. Most preferably the fat in the gel is milk fat. The amount of fat in the gel is preferably 5-30 wt%. The moisture content of the gel is preferably 45-90 wt%, especially 50-80wt%. The combined amount of water and fat in the gel is preferably 50-95 wt%, more preferably 60-90 wt%. Part or all of the fat and/or the water may derive from dairy components, notably fresh cheese, milk, cream, sour cream and the like. The sugar content of the dessert gel is preferably 5-30 wt%, especially 7-25 wt%. By sugar is meant the combined amount of mono- and disaccharides. Preferred sugars are sucrose, fructose and glucose. Fruit pulp, glucose syrup and corn syrup are suitable sources of sugar, but other sugar sources, e.g. conventional refined sucrose may also be used. The sugar will usually also include some lactose originating from the dairy components.

The gel may include minor components like flavours, food acids, preservatives, salt, etc.

The sauce composition preferably has a moisture content of 0-80 wt%, more preferably 20-70 wt%. The combined amount of fat and moisture in the sauce composition to achieve suitable microwave heating is preferably 30-85 wt%, more preferably 35-80 wt%. The sugar content of the sauce composition is preferably 15-70 wt%, more preferably 25-55 wt%.

In a preferred embodiment, the sauce composition comprises cocoa butter or cocoa powder or cocoa mass or a combination of two or more thereof. It is particularly preferred for the combined amount of material derived from cocoa beans in the sauce composition, expressed on its dry contents, to be 20-75 wt%, especially 30-65 wt%.

In another preferred embodiment, the sauce composition is fruit based. For example, the sauce composition may be fruit pulp or puree or compote, fruit coulis or fruit sauce. Attractive sauce compositions are for example raspberry coulis, strawberry sauce and apple sauce. In fruit based sauce, the content of fruit derived material in the sauce composition is preferably at least 40 wt%, more preferably at least 50 wt%.

The sauce composition may be non-pourable at 15°C. It can e.g. be a solid or a paste. It can be made pourable by heating it e.g. in a microwave. In a particularly preferred embodiment the sauce composition comprises 20-100 wt% chocolate, e.g. milk chocolate, plain chocolate or white chocolate. For example, chocolate can be molten and kept at a temperature of 40°C, filled into a sachet or cup and the sachet or cup can be sealed to provide the second closed container containing the sauce composition. To reduce the viscosity of the sauce composition if desired, for example, some vegetable oil may be mixed into the molten chocolate before packing it into the second container. For example 5-40 wt% of sunflower oil or maize oil or other liquid vegetable oil may be mixed into the molten chocolate. Alternatively, water and/or cream may be mixed into the molten chocolate. Chocolate sauce with paste-like consistency may also be prepared by mixing e.g. molten chocolate with sugar, cream, water and syrup, e.g. corn syrup or glucose syrup.

The sauce composition may be pourable at 15°C. It can then be used as such, without heating, on the dessert gel. However, to obtain the most attractive dessert with sensoric contrast, it is preferred for a sauce composition that is already pourable, to still be heated before it is poured onto the dessert gel prior to consumption. For example, fruit sauce can be pourable at 15°C. A pourable chocolate based sauce can be obtained at 15°C, by melting the chocolate to be used and mixing in water. E.g. a mixing weight ratio of chocolate and water between 2:1 and 1:2 can be used.

Other examples of sauce compositions that can be used are hazelnut paste and other nut pastes and butters, optionally diluted with oil and/or water to adapt the viscosity. Caramel sauce may also be used as the sauce composition.

The sauce composition may include minor components like structurants, e.g. modified starch, flavours, food acid, preservative e.g. potassium sorbate, salt and the like.

The second container is suitable for heating in a microwave oven. It can suitably be made from e.g. polypropylene, polystyrene, polythene, chrystalline polyethylene terphthalate and the like. Other food packaging materials that are suitable for heating in a microwave oven may be used as well.

To avoid overheating and build up of too high pressure during the heating it can be recommended in the usage instructions, for example if the second container is a plastic sachet, to make a pin hole in the sachet and to place it on a plate in the oven, to catch any leakage through the pin hole. If the second container is a jar or cup with a foil or laminate closure, it can be advised to open the closure or to pinch a hole in the foil or laminate. Preferably, the second container has a pressure valve. The pressure valve may for example be embedded in a seal of the container. The seal can locally be less strong than elsewhere and be designed to open in such place if the pressure inside the container reaches e.g. 1.5 atmosphere.

Other methods to prevent explosion of the sauce material due to overheating during microwave heating are well known to the skilled person and may be used as well. If the second container has a pressure valve, the container is preferably heated in step iii of the present method while it is still closed. If the container is not provided with protection against overheating, preferably at least some connection is made between the interior of the second container and the atmosphere before step iii in the present method.

The heating time in the microwave oven to achieve the desirable temperature should be adapted to the amount of sauce to be heated, the capacity of the oven and the composition of the sauce. It can readily be determined by routine experimentation. Typically, the appropriate time will be longer for compositions containing less water and more fat. The sauce composition preferably comprises at least some water as this provides natural protection against overheating of the sauce. For example, for sauce compositions containing no water, the temperature can easily rise to about 130°C or more. This is higher than optimal as at such high temperature of the sauce, the gel structure may suffer when the sauce is poured over it. Any spillage of the sauce may also cause burns to the cook.

The sauce is heated in step iii to a temperature of preferably 30-90°C, more preferably 35-75°C, especially 40-60°C. The second container containing the sauce composition may be heated in any practical manner, but preferably it is heated in a microwave oven. If the sauce composition is non-pourable at 15°C, then the second container with the sauce composition should be heated to at least such extent that the sauce becomes pourable to allow it to be poured over the demoulded dessert gel. If the sauce composition is chocolate, that can usually be achieved by heating it to above about 30-33°C, depending on the type of chocolate. However, for optimum sensoric effect, heating to a somewhat higher temperature, notably above 35°C, especially above 40°C is preferred.

It is preferred for the surface of the side wall of the dessert gel to have a multitude of sunk channels. This can e.g. be achieved by using as container for the gel a tub that has ribs on its side wall such that it causes such sunk channels to be formed in the set gel. In step iv of the present method then preferably the sauce is poured on top of the demoulded dessert gel to cause a flow of sauce from the top of the dessert gel through the sunk channels. In particular if the sauce has a different colour than the dessert gel, this provides an attractive appearance for the dessert that is then ready for consumption. Especially if the sauce is caused to be constrained to flow in the sunk channels while leaving uncovered gel surface in between those channels, this can make the product look appealing. The first container used as mould for the gel preferably is shaped such that the demoulded gel has on its top side a well surrounded by a rim such that a thin layer of sauce will be retained on the top of the gel and a portion of the sauce will flow over the rim and will find its way to the sunk channels.

Throughout this specification, parts, percentages and ratios are by weight unless otherwise indicated. The words water and moisture are used interchangeably. Except in the operating and comparative examples, or where otherwise explicitly indicated, all numbers in this description indicating amounts of material ought to be understood as modified by the word "about".

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### Example 1

A CreaVite ® sheared gel was prepared having a composition as shown in table 1.

**Table 1**

| Ingredient | Wt% |
|---|---|
| Cream cheese | 51 |
| Double cream | 2.4 |
| Skimmed milk | 18.9 |
| Water | 27.2 |
| Agar | 0.5 |

The sheared gel was prepared as follows: The liquid ingredients were combined in a 20 kg tank. The agar gelling agent was cold dispersed in the liquid whilst mixing with a high shear Silverston mixer for 5 minutes. The cream cheese was added and the mixture heated to 90°C. The composition was kept at this temperature for 2 minutes while shearing with the Silverston was continued. The mixture was then transferred in a Stefan mixer and cooled under shear to below 15°C. The CreaVite ® sheared gel obtained was transferred into a container and stored in a refrigerator until it was used further.

With the CreaVite ® sheared gel a Honey and Ginger dessert gel was prepared with the composition shown in table 2. The ingredients were combined in a pan. The mixture was heated while stirring it until the temperature reached 95°C. It was kept at that temperature for 1 minute and briefly mixed with a hand-held blender. Plastic containers having a volume of about 150 ml each were used as moulds. Into each container 127 g of the gel composition was dosed. A round oat and ginger cookie with a weight of 13 g which matched the container size, was placed on top of the gel composition in each container. The containers were sealed with plastic film and stored at 5°C.

**Table 2**

| Ingredient | Wt% |
|---|---|
| CreaVite ® sheared gel | 56.4 |
| Cream | 22.5 |
| Pectin Slendid type 200* | 0.7 |
| Ginger powder | 0.1 |
| Ginger pulp | 13.5 |
| Honey | 6.8 |

| | |
|---|---|
| * Pectin Slendid type 200 is a high methoxy pectin ex CPKelco, Hertford, England. It acts mainly as fatreplacer; it does not gel in this type of formulation. | |

A sauce composition was prepared from the composition shown in table 3. The water and cream were heated in a pan to 60°C. The chocolate and glucose syrup were added and heating was continued while stirring until the temperature reached 85°C. The composition was then cooled to about 35°C. Polypropylene pots with a volume of about 30 ml each were used as container for the sauce composition. Into each pot, about 20 g of the sauce composition was dosed and the pots were sealed with plastic film and stored at 5°C. A container with dessert gel and a pot with sauce composition can be packed together in a carton and stored at 5°C to provide the present kit.

**Table 3**

| Ingredient | Wt% |
|---|---|
| Chocolate* | 50 |
| Water | 17.5 |
| Whipping cream | 17.5 |
| Glucose syrup | 15 |

| | |
|---|---|
| * The chocolate had been prepared from 40 parts sugar, 24 parts cocoabutter, 21 parts cocoamass, 9.2 parts full fat milk powder, 5.5 parts butteroil and minor amounts of phosphatide and flavouring. | |

The dessert gel contained about 61 wt% water, 16 wt% fat, 18 wt% sugar and 2 wt% protein. The sauce contained about 30 wt% water, 28 wt% fat, 35 wt% sugar and 2 wt% protein.

To prepare the dessert for consumption, the kit is taken from the cold storage. The lid is removed from the container with the gel and the container is inverted onto a plate to demould the dessert gel. The lid of the sauce pot is slightly opened to prevent pressure build up. The sauce can be heated to a temperature of about 50°C in a microwave oven at 900 w in about 15-20 s. The cover film is then removed from the pot and the sauce poured over the demoulded gel to provide the dessert for consumption.

### Example 2

Example 1 was repeated except that the dessert gel was prepared from a chocolate composition as shown in table 4. No base was applied for the dessert gel.

**Table 4**

| Ingredient | Wt% |
|---|---|
| CreaVite ® sheared gel | 61.2 |
| Cream | 20.0 |
| Pectin Slendid type 200 | 0.5 |
| Dark chocolate | 10.2 |
| Castor sugar | 8.1 |

The dessert gel contained about 59 wt% water, 20 wt% fat, 16 wt% sugar and 2 wt% protein.

### Example 3

Example 1 was repeated except that a fruit cookie was used as base and a white chocolate dessert gel was prepared from the composition shown in table 5.

**Table 5**

| Ingredient | Wt% |
|---|---|
| CreaVite ® sheared gel | 49.7 |
| Cream | 29.8 |
| Pectin Slendid type 200 | 0.6 |
| White chocolate | 19.9 |

The dessert gel contained about 56 wt% water, 27 wt% fat, 13 wt% sugar and 3 wt% protein.

### Example 4

Example 1 was repeated except that a toffee sponge base, also weighing 13 g per piece, was used for the dessert gel and a banana dessert gel was prepared from the composition shown in table 6.

**Table 6**

| Ingredient | Wt% |
|---|---|
| CreaVite ® sheared gel | 54.9 |
| Cream | 26.7 |
| Pectin Slendid type 200 | 0.4 |
| Caster sugar | 5.5 |
| Banana puree (+ 4% lemon juice) | 12.5 |

The dessert gel contained about 68 wt% water, 18 wt% fat, 10 wt% sugar and 2 wt% protein.

### Example 5

A range of sauce compositions was prepared. Twenty grams of sauce composition was filled into polypropylene pots of 40 ml volume each. The pots were covered with cling film and stored in a refrigerator. Each of the sauce compositions can be combined with dessert gels e.g. as described in examples 1-4, to provide dessert kits according to the invention.

The pots with sauces were used for a series of heating trials as described below. The recipes and compositions used are shown in table 7. The sauces were prepared by heating the water or oil, if used, to 60°C, adding the chocolate and stirring it until the chocolate is molten, heating the mixture further till 85°C, stirring the mixture, allowing it to cool to about 35°C while stirring occasionally and filling the sauce in the pots. For sample 5E, the heating was done in an au bain marie pan. All samples were solid at 15°C, except sample 5B which was fluid at that temperature.

**Table 7**

| Sample | Recipe (wt%) | | | Composition (wt%) | | |
|---|---|---|---|---|---|---|
| | Chocolate* | water | Oil** | water | fat | sugar |
| 5A | 64 | 36 | - | 36 | 28 | 28 |
| 5B | 30 | 70 | - | 70 | 13 | 13 |
| 5C | 85 | - | 15 | 0 | 52 | 38 |
| 5D | 70 | - | 30 | 0 | 60 | 31 |
| 5E | 100 | - | - | 0 | 44 | 45 |

| | | | | | | |
|---|---|---|---|---|---|---|
| * The chocolate used was the same as described in table 3. ** The oil used was maize oil. | | | | | | |

For the heating trials, a pot with 20 g sauce composition was taken from the cooling, a few pin holes were made in the cling film and the pot was heated in a microwave oven at 900 w for a certain time. After the heating, the pot was taken from the oven, the cling film removed and the sauce stirred for 10 s. Then the temperature was measured and the consistency assessed.

For sample 5A a good consistency was obtained after 12-16 s heating. The temperature reached after such heating times ranged from 43 to 64°C. After 60 s heating the temperature of the sauce reached 108°C and the consistency of the sauce became lumpy. The sauce was judged to be good.

The sauce of sample 5B could be poured at 15°C. However, its taste was found to be watery and it was not much appreciated. After heating for 20s the temperature was 42°C. After 47 s heating the temperature reached 98°C and the sauce started to boil over.

Sample 5C was not yet fully molten after 2 minutes heating. Its temperature was then 33°C. After 2 min and 30 s heating the temperature was 46°C and the consistency was good. Longer heating times led to higher temperature while the consistency remained good up to 4 min and 30 s heating, at which stage a temperature of 101°C was reached.

For sample 5D a temperature of about 30°C was reached after 1 min and 50 s heating. The composition had not yet fully molten. Longer heating did lead to a fully molten composition. However, then separation started to occur. Although this could be overcome by stirring, the taste of this sauce was not much liked and overall the composition was not much appreciated.

Sample 5E had reached a temperature of 44°C after 2 min and 30 s heating but there was still a chunk of chocolate in the composition. Probably this could have been avoided by using slower heating. After 3 minutes heating the temperature reached to 53°C and the sauce had a good consistency, although in this case also more slow heating would probably have given a more even consistency. After 3 min and 30 s heating the sauce had a very good consistency and a temperature of 60°C. Further heating led to higher temperatures while the consistency continued to be good up to 120°C. At temperatures above 130°C, the composition started to thicken and became less good.

### Example 6

Trials as described in example 5 were done with two further, commercially available, chocolate sauce compositions.

The composition of sample 6A was

| | |
|---|---|
| 28 wt% | white sugar |
| 20 wt% | chocolate |
| 19 wt% | water |
| 15 wt% | cream |
| 15 wt% | glucose syrup |
| 2 wt% | butter |
| 1 wt% | minor components (maize starch, acid, salt, sorbate) |

The sauce contained 29 wt% water, 18 wt% fat and 49 wt% sugar.

The sauce composition had a pasty consistency at ambient temperature. After 25 s heating the temperature was 37°C and the sauce was still a little thick. After 30-40 s heating temperatures from 52°C to 76°C were obtained and the consistency was good. After longer heating the composition started to bubble.

The composition of sample 6B was

| | |
|---|---|
| 33 wt% | chocolate |
| 28 wt% | glucose syrup |
| 21 wt% | water |
| 10 wt% | sugar |
| 6 wt% | sorbitol |
| pm | minor components (carrageenan, stabilizer, acid, sorbate) |

This composition contained 29 wt% water, 12 wt% fat and 48 wt% sugar.

The sauce composition had a pasty consistency at ambient temperature. After 15 s heating the temperature was 41°C and the sauce had a good consistency for pouring. After 25 s heating a temperature of 85°C was obtained and the consistency was still good. After longer heating the composition started to boil.

### Example 7

A set of trials was done wherein different dessert products were each coated with a warm chocolate sauce. The samples were assessed by a panel of 5 members. The dessert gels/products tested are listed in table 8.

**Table 8**

| Sample | Description |
|---|---|
| 7E1 | Strawberry dessert gel |
| 7E2 | Baked cheesecake |
| 7C3 | Gelatine based Panna cotta |
| 7C4 | Gelatine jelly |
| 7C5 | Donut |
| 7C6 | Fruit pie |
| 7C7 | Cream filled profiterole |
| 7C8 | Icecream from freezer |
| 7C9 | Icecream from refrigerator |

Samples 7E1 and 7E2 illustrate the invention. Samples 7C3 - 7C9 are comparisons.

The strawberry dessert gel of sample 7E1 was prepared as the dessert gel described in example 1 except that the composition shown in table 9 was used.

**Table 9**

| Ingredient | Wt% |
|---|---|
| CreaVite ® sheared gel | 53.7 |
| Cream | 8.9 |
| Sour cream | 5.8 |
| Caster sugar | 1.6 |
| White chocolate | 16.4 |
| Strawberry sauce | 13.4 |
| Strawberry flavour | 0.1 |

Sample 7E2 was baked vanilla cheesecake comprising 21 wt% butter shortbread base and 79 wt% filling. The filling consisted of full fat soft cheese, whipping cream, sugar, whole milk, whole egg, wheat flour, corn flour and flavouring.

Sample 7C3, the gelatine based Panna cotta, was made of cream, sugar, water, pork gelatine, vanilla extract and ground vanilla.

Sample 7C4, the gelatine jelly was prepared by dissolving fruit flavoured gelatine crystals in hot water, pouring the composition in a container/mould, sealing the mould with a lid, and storing it in the refrigerator.

Sample 7C6, the fruit pie, was a conventional apple and blackcurrent pie having an outer shell of baked dough and a fruit filling inside.

Sample 7C7, the profiteroles, consisted of choux pastry with cream filling.

The dessert products were all stored in a refrigerator except the icecream which was kept frozen at -18°C. Icecream sample 7C9 was allowed to warm up in the refrigerator to a temperature of about -5°C before it was tested.

The sauce composition used in the test was the same as sample 5E in each case.

The procedure used each time was as follows:
- The dessert product was taken from the refrigerator or freezer. The container was opened and the dessert gel or product was demoulded onto a plate or otherwise placed on a plate. Its temperature was measured.
- Simultaneously, a pot with 20 g chocolate sauce composition was heated in a microwave oven at 900 w for 2 min and 30 s. The temperature was measured.
- The chocolate sauce was poured over the dessert product and left for 20-30 s.
- The panel tasted and assessed the sample. Each assessment took about 2 minutes.

In each case the sauce temperature was in the range of 45-50°C, except for sample 7C7 for which it was 55°C. The temperature of the dessert gel/product was 5°C, except for the icecream samples 7C8 and 7C9 for which it was -13 and -4°C, respectively.

The icecream samples started to melt quickly, especially sample 7C9. After 2 minutes it looked unappetizing. The sauce had at that stage become very hard, it had shrunk and was rubbery in texture.

For the samples with a pastry surface, 7C5, 7C6 and 7C7, the temperature difference perceived in the mouth between the dough and the chocolate coating was less than for the samples with the higher water activity at the gel surface, 7E1, 7E2, 7C3 and 7C4.

Samples 7C3 and especially sample 7C4 suffered from collapse of the gel structure in contact with the warm sauce. Especially for sample 7C4 this caused the sauce to slide of the gel, leaving only a thin, see through layer on the gel and most of the sauce on the plate.

Samples 7E1 and 7E2 were acceptable, sample 7E1 was generally preferred. It had, together with icecream sample 7C9, the highest perceived temperature difference between the sauce and the dessert gel/product surface.

### Example 8

A kit according to the invention can be prepared using a strawberry dessert gel as described for sample 7E1. For example, 500 g of the gel can be filled in a plastic tub with a volume of 600 ml. A foil can be sealed onto the rim of the tub and the closure be covered with a plastic lid.

A strawberry sauce composition can be prepared by mixing 10 parts of fresh strawberries with 1 part of caster sugar and 0.2 parts of lemon juice in a kitchen blender. 70 Grams of the sauce composition can be filled in a plastic sachet and the sachet be sealed. The sachet can be glued onto the plastic lid of the tub containing the gel. The tub and sachet can be placed in a carton outer and be stored in a refrigerator at 4°C, until it is to be consumed.

### The dessert can be prepared for consumption as follows:

Remove the sachet from the lid and place it in a cup. Make a pinhole in the sachet near the top. Heat it in a microwave oven to 50°C. Remove the lid and the cover leaf from the tub. Place a plate onto the tub and turn the tub and plate over. Prick a pin hole in the now-top-side of the tub to release the vacuum and demould the dessert gel from the tub onto a plate. Cut the sachet open and pour the warmed strawberry sauce onto the dessert gel. The dessert is now ready for consumption. It can be used e.g. to serve 4 portions.

## Claims

1. A kit for preparing an edible dessert product comprising
A. a first closed container containing a dessert gel having a temperature of 1-15°C, which gel is not dependent on gelatin, the container constituting a mould for the gel and the gel being demouldable therefrom, and
B. a second closed container containing a sauce composition which container and sauce composition are suitable to be subjected to microwave heating and which sauce composition is pourable or can be made pourable by microwave heating.

2. A kit according to claim 1 wherein the gel has a water activity of 0.9-1.

3. A kit according to claim 1 or claim 2 wherein the gel comprises 40-95 wt% water, 1-11 wt% protein and 3.5-35 wt% fat.

4. A kit according to any one of claims 1-3 wherein the first container includes an edible base for the gel.

5. A kit according to any one of claims 1-4 wherein the dessert gel is based on non-starch polysaccharide gelling agent.

6. A kit according to any one of claims 1-5 wherein the gel comprises 1-8 wt% dairy protein.

7. A kit according to any one of claims 1-6 wherein the gel has a temperature of 3-10°C.

8. A kit according to any one of claims 1-7 wherein the surface of the side wall of the gel has a multitude of sunk channels.

9. A kit according to any one of claims 1-8 wherein the sauce composition contains a combined amount of water and fat of at least 25 wt%.

10. A kit according to any one of claims 1-9 wherein the sauce composition comprises cocoa butter or cocoa powder or cocoa mass or a combination of two or more thereof.

11. A kit according to any one of claims 1-10 wherein the sauce composition comprises 20-100 wt% chocolate.

12. A method for preparing an edible dessert product using a kit according to any one of claims 1-11, comprising the steps of
i) opening the closed first container,
ii) demoulding the dessert gel from the opened first container,
iii) heating the second container to provide a pourable sauce, and
iv) pouring the pourable sauce on top of the demoulded dessert gel.

13. A method according to claim 12 wherein in step iii the sauce is heated to a temperature of 30-90°C.

14. A method according to claim 12 or claim 13 wherein the second container is heated in a microwave oven.

15. A method according to any one of claims 12-14 wherein the surface of the side wall of the dessert gel has a multitude of sunk channels and wherein in step iv the sauce is poured on top of the demoulded dessert gel to cause a flow of sauce from the top of the dessert gel through the sunk channels.
